# EUROPEAN PATENT APPLICATION

(11) **EP 2 669 784 A1**
(43) Date of publication of application: **04.12.2013**
(21) Application number: 13166795.8
(22) Date of filing: 07.05.2013
(51) Int. Cl.: G06F 3/0488

(54) **Mobile terminal and control method thereof**

(30) Priority: 29.05.2012 KR 20120056724
(71) Applicant: LG ELECTRONICS INC., Yeongdeungpo-Gu Seoul 150-721 (KR)
(72) Inventor: Park, Jongseok, 153-801 Seoul (KR)
(74) Representative: Cabinet Plasseraud

(57) **Abstract**

A mobile terminal and a control method thereof are provided. The mobile terminal includes a display, and a controller configured to display at least one first application and one icon corresponding to at least one second application in an area of the display, the second application sharing content with at least one first application and/or being linked with the first application, wherein, when at least one of the at least one icon displayed in the area of the display is selected, the controller executes a second application corresponding to the selected icon with the first application. Accordingly, information on an application relating to an application displayed on the display is provided to a user such that the user can use various applications of the mobile terminal conveniently.

## Description

### CROSS-REFERENCE TO RELATED APPLICATIONS

This application claims the benefit of earlier filing date and right of priority to Korean Patent Application No. 29 May, 2012, filed on 10-2012-0056724.

### TECHNICAL FIELD

The present invention relates to a mobile terminal and, more particularly, to a mobile terminal and a control method thereof to provide information on an application relating to an application displayed on a display to a user so as to allow the user to conveniently use various applications of the mobile terminal.

### DISCUSSION OF THE RELATED ART

As functions of terminals such as personal computers, laptop computers, cellular phones diversify, the terminals become multimedia players having multiple functions for capturing pictures or moving images, playing music, moving image files and games and receiving broadcasting programs.

Terminals can be categorized as mobile terminals and stationary terminals. The mobile terminals can be further comprised of handheld terminals and vehicle mount terminals according to whether users can personally carry the terminals. Conventional terminals including mobile terminals provide an increasing number of complex and various functions.

To support and enhance the increasing number of functions in a terminal, improving a structural part and/or a software part of the terminal would be desirable.

Furthermore, there is an increasing need for selecting an application more rapidly and conveniently.

### SUMMARY

The present invention relates to a mobile terminal and a control method thereof to provide information on an application relating to an application displayed on a display to a user so as to allow the user to conveniently use various applications of the mobile terminal.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention.

FIG. 1 is a block diagram of a mobile terminal according to an embodiment;

FIG. 2A is a front perspective view of the mobile terminal according to an embodiment;

FIG. 2B is a rear perspective view of the mobile terminal according to an embodiment;

FIG. 3 illustrates an exemplary mobile terminal according to an embodiment of the present invention;

FIG. 4 is a flowchart illustrating operations of the mobile terminal shown in FIG. 1;

FIGS. 5 to 7 show images displayed according to operations of the mobile terminal shown in FIG. 4;

FIG. 8 illustrates the relations among applications of the mobile terminal of FIG. 4;

FIGS. 9 and 10 illustrate a method of displaying related icons in operations of the mobile terminal shown in FIG. 4 according to an embodiment of the present invention;

FIGS. 11 to 18 illustrate a method of displaying the related icons in operations of the mobile terminal shown in FIG. 4 according to another embodiment of the present invention;

FIG. 19 illustrates change of display of the related icons in operations of the mobile terminal shown in FIG. 4;

FIGS. 20 to 28 illustrate various display forms of an executed application and a related application in the mobile terminal of FIG. 4;

FIGS. 29 and 30 illustrate exchange of content between the executed application and the related application in the mobile terminal of FIG. 4;

FIG. 31 illustrates the relation between a plurality of executed applications and related icons; and

FIGS. 32 and 33 illustrate a method of displaying applications related to a specific icon.

### DETAILED DESCRIPTION

Arrangements and embodiments may now be described more fully with reference to the accompanying drawings, in which exemplary embodiments may be shown. Embodiments may, however, be embodied in many different forms and should not be construed as being limited to embodiments set forth herein; rather, embodiments may be provided so that this disclosure will be thorough and complete, and will fully convey the concept to those skilled in the art.

A mobile terminal may be described below with reference to the accompanying drawings. In the following description, suffixes "module" and "unit" may be given to components of the mobile terminal in consideration of only facilitation of description and do not have meanings or functions discriminated from each other.

The mobile terminal may include a cellular phone, a smart phone, a laptop computer, a digital broadcasting terminal, personal digital assistants (PDA), a portable multimedia player (PMP), a navigation system and/or so on.

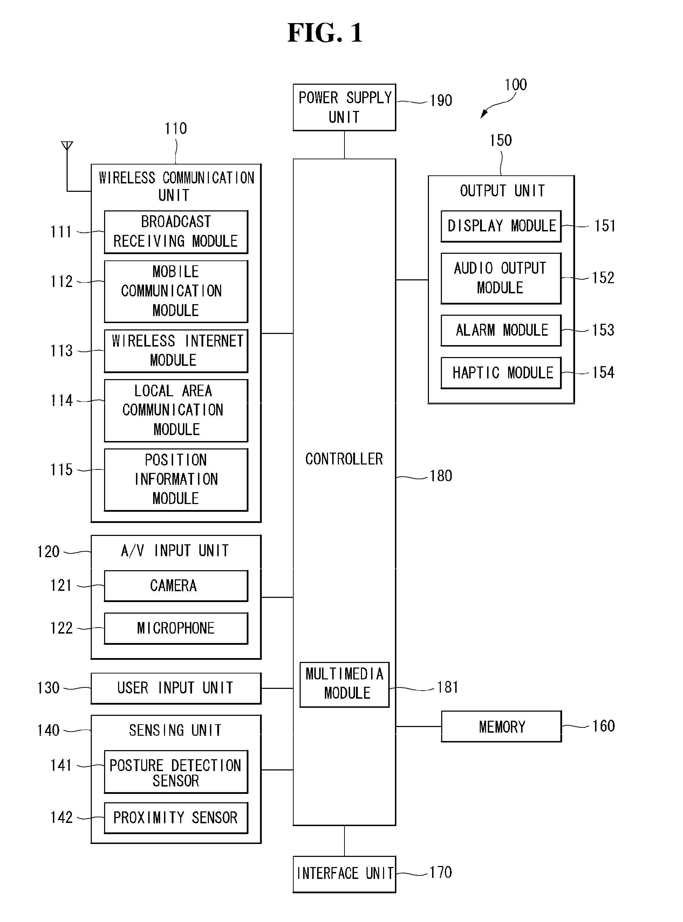

FIG. 1 is a block diagram of a mobile terminal according to an embodiment. Other embodiments, configurations and arrangements may also be provided.

As shown, the mobile terminal 100 may include a wireless communication unit 110 (or radio communication unit), an audio/video (A/V) input unit 120, a user input unit 130, a sensing unit 140, an output unit 150, a memory 160, an interface 170, a controller 180, and a power supply 190. The components shown in FIG. 1 may be essential parts and/or a number of components included in the mobile terminal 100 may vary. Components of the mobile terminal 100 may now be described.

The wireless communication unit 110 may include at least one module that enables radio communication between the mobile terminal 100 and a radio communication system or between the mobile terminal 100 and a network in which the mobile terminal 100 is located. For example, the wireless communication unit 110 may include a broadcasting receiving module 111, a mobile communication module 112, a wireless Internet module 113, a short range communication module 114 (or local area communication module), and a location information module 115 (or position information module).

The broadcasting receiving module 111 may receive broadcasting signals and/or broadcasting related information from an external broadcasting management server through a broadcasting channel. The broadcasting channel may include a satellite channel and a terrestrial channel, and the broadcasting management server may be a server that generates and transmits broadcasting signals and/or broadcasting related information or a server that receives previously created broadcasting signals and/or broadcasting related information and transmits the broadcasting signals and/or broadcasting related information to a terminal.

The broadcasting signals may include not only TV broadcasting signals, radio broadcasting signals, and data broadcasting signals but also signals in the form of a combination of a TV broadcasting signal and a radio broadcasting signal. The broadcasting related information may be information on a broadcasting channel, a broadcasting program or a broadcasting service provider, and may be provided even through a mobile communication network. In the latter case, the broadcasting related information may be received by the mobile communication module 112.

The broadcasting related information may exist in various forms. For example, the broadcasting related information may exist in the form of an electronic program guide (EPG) of a digital multimedia broadcasting (DMB) system or in the form of an electronic service guide (ESG) of a digital video broadcast-handheld (DVB-H) system.

The broadcasting receiving module 111 may receive broadcasting signals using various broadcasting systems. More particularly, the broadcasting receiving module 111 may receive digital broadcasting signals using digital broadcasting systems such as a digital multimedia broadcasting-terrestrial (DMB-T) system, a digital multimedia broadcasting-satellite (DMB-S) system, a media forward link only (MediaFLO) system, a DVB-H and integrated services digital broadcast-terrestrial (ISDB-T) systems. The broadcasting receiving module 111 may receive signals from broadcasting systems providing broadcasting signals other than the above-described digital broadcasting systems.

The broadcasting signals and/or broadcasting related information received through the broadcasting receiving module 111 may be stored in the memory 160. The mobile communication module 112 may transmit/receive a radio signal to/from at least one of a base station, an external terminal and a server on a mobile communication network. The radio signal may include a voice call signal, a video telephony call signal or data in various forms according to transmission and reception of text/multimedia messages.

The wireless Internet module 113 may correspond to a module for wireless Internet access and may be included in the mobile terminal 100 or may be externally attached to the mobile terminal 100. Wireless LAN (WLAN or Wi-Fi), wireless broadband (Wibro), world interoperability for microwave access (Wimax), high speed downlink packet access (HSDPA) and so on may be used as a wireless Internet technique.

The short range communication module 114 may correspond to a module for short range communication. Further, Bluetooth®, radio frequency identification (RFID), infrared data association (IrDA), ultra wideband (UWB) and/or ZigBee® may be used as a short range communication technique.

The location information module 115 may confirm or obtain a location or a position of the mobile terminal 100. The location information module 115 may obtain position information by using a global navigation satellite system (GNSS). The GNSS is a terminology describing a radio navigation satellite system that revolves around the earth and transmits reference signals to predetermined types of radio navigation receivers such that the radio navigation receivers can determine their positions on the earth's surface or near the earth's surface. The GNSS may include a global positioning system (GPS) of the United States, Galileo of Europe, a global orbiting navigational satellite system (GLONASS) of Russia, COMPASS of China, and a quasi-zenith satellite system (QZSS) of Japan, for example.

A global positioning system (GPS) module is a representative example of the location information module 115. The GPS module may calculate information on distances between one point or object and at least three satellites and information on a time when distance information is measured and apply trigonometry to the obtained distance information to obtain three-dimensional position information on the point or object according to latitude, longitude and altitude at a predetermined time.

A method of calculating position and time information using three satellites and correcting the calculated position and time information using another satellite may also be used. Additionally, the GPS module may continuously calculate a current position in real time and calculate velocity information using the location or position information.

The A/V input unit 120 may input (or receive) an audio signal and/or a video signal. The A/V input unit 120 may include a camera 121 and a microphone 122. The camera 121 may process image frames of still images or moving images obtained by an image sensor in a video telephony mode or a photographing mode. The processed image frames may be displayed on a display 151, which may be a touch screen.

The image frames processed by the camera 121 may be stored in the memory 160 or may be transmitted to an external device through the wireless communication unit 110. The mobile terminal 100 may also include at least two cameras 121.

The microphone 122 may receive an external audio signal in a call mode, a recording mode and/or a speech recognition mode, and the microphone 122 may process the received audio signal into electric audio data. The audio data may then be converted into a form that can be transmitted to a mobile communication base station through the mobile communication module 112 and output in the call mode. The microphone 122 may employ various noise removal algorithms (or noise canceling algorithm) for removing or reducing noise generated when the external audio signal is received.

The user input unit 130 may receive input data for controlling operation of the mobile terminal 100 from a user. The user input unit 130 may include a keypad, a dome switch, a touch pad (constant voltage/capacitance), a jog wheel, a jog switch and/or so on.

The sensing unit 140 may sense a current state of the mobile terminal 100, such as an open/close state of the mobile terminal 100, a position of the mobile terminal 100, whether a user touches the mobile terminal 100, a direction of the mobile terminal 100, and acceleration/deceleration of the mobile terminal 100, and the sensing unit 140 may generate a sensing signal for controlling operation of the mobile terminal 100. For example, in an example of a slide phone, the sensing unit 140 may sense whether the slide phone is opened or closed. Further, the sensing unit 140 may sense whether the power supply 190 supplies power and/or whether the interface 170 is connected to an external device. The sensing unit 140 may also include a proximity sensor 141. The sensing unit 140 may sense a motion of the mobile terminal 100.

The output unit 150 may generate visual, auditory and/or tactile output, and the output unit 150 may include the display 151, an audio output module 152, an alarm 153 and a haptic module 154. The display 151 may display information processed by the mobile terminal 100. The display 151 may display a user interface (UI) and/or a graphic user interface (GUI) related to a telephone call when the mobile terminal 100 is in the call mode. The display 151 may also display a captured and/or received image, a UI or a GUI when the mobile terminal 100 is in the video telephony mode or the photographing mode.

The display 151 may include at least one of a liquid crystal display, a thin film transistor liquid crystal display, an organic light-emitting diode display, a flexible display and/or a three-dimensional display. The display 151 may be of a transparent type or a light transmissive type. That is, the display 151 may include a transparent display.

The transparent display may be a transparent liquid crystal display. A rear structure of the display 151 may also be of a light transmissive type. Accordingly, a user may see an object located behind the body (of the mobile terminal 100) through the transparent area of the body of the mobile terminal 100 that is occupied by the display 151.

The mobile terminal 100 may also include at least two displays 151. For example, the mobile terminal 100 may include a plurality of displays 151 that are arranged on a single face at a predetermined distance or integrated displays. The plurality of displays 151 may also be arranged on different sides.

When the display 151 and a sensor sensing touch (hereafter referred to as a touch sensor) form a layered structure that is referred to as a touch screen, the display 151 may be used as an input device in addition to an output device. The touch sensor may be in the form of a touch film, a touch sheet, and/or a touch pad, for example.

The touch sensor may convert a variation in pressure applied to a specific portion of the display 151 or a variation in capacitance generated at a specific portion of the display 151 into an electric input signal. The touch sensor may sense pressure of touch as well as position and area of the touch.

When the user applies a touch input to the touch sensor, a signal corresponding to the touch input may be transmitted to a touch controller. The touch controller may then process the signal and transmit data corresponding to the processed signal to the controller 180. Accordingly, the controller 180 may detect a touched portion of the display 151.

The proximity sensor 141 (of the sensing unit 140) may be located in an internal region of the mobile terminal 100, surrounded by the touch screen, and/or near the touch screen. The proximity sensor 141 may sense an object approaching a predetermined sensing face or an object located near the proximity sensor 141 using an electromagnetic force or infrared rays without having mechanical contact. The proximity sensor 141 may have a lifetime longer than a contact sensor and may thus have a wide application in the mobile terminal 100.

The proximity sensor 141 may include a transmission type photo-electric sensor, a direct reflection type photo-electric sensor, a mirror reflection type photo-electric sensor, a high-frequency oscillating proximity sensor, a capacitive proximity sensor, a magnetic proximity sensor, and/or an infrared proximity sensor. A capacitive touch screen may be constructed such that proximity of a pointer is detected through a variation in an electric field according to the proximity of the pointer. The touch screen (touch sensor) may be classified as a proximity sensor 141.

For ease of explanation, an action of the pointer approaching the touch screen without actually touching the touch screen may be referred to as a proximity touch and an action of bringing the pointer into contact with the touch screen may be referred to as a contact touch. The proximity touch point of the pointer on the touch screen may correspond to a point of the touch screen at which the pointer is perpendicular to the touch screen.

The proximity sensor 141 may sense the proximity touch and a proximity touch pattern (e.g., a proximity touch distance, a proximity touch direction, a proximity touch velocity, a proximity touch time, a proximity touch position, a proximity touch moving state, etc.). Information corresponding to the sensed proximity touch action and proximity touch pattern may then be displayed on the touch screen.

The audio output module 152 may output audio data received from the wireless communication unit 110 or stored in the memory 160 in a call signal receiving mode, a telephone call mode or a recording mode, a speech recognition mode and a broadcasting receiving mode. The audio output module 152 may output audio signals related to functions, such as a call signal incoming tone and a message incoming tone, performed in the mobile terminal 100. The audio output module 152 may include a receiver, a speaker, a buzzer, and/or the like. The audio output module 152 may output sounds through an earphone jack. The user may hear the sounds by connecting an earphone to the earphone jack.

The alarm 153 may output a signal for indicating generation of an event of the mobile terminal 100. For example, an alarm may be generated when receiving a call signal, receiving a message, inputting a key signal, and/or inputting a touch. The alarm 153 may also output signals in forms different from video signals or audio signals, for example, a signal for indicating generation of an event through vibration. The video signals and/or the audio signals may also be output through the display 151 or the audio output module 152.

The haptic module 154 may generate various haptic effects that the user can feel. One example of the haptic effects is vibration. An intensity and/or pattern of vibration generated by the haptic module 154 may also be controlled. For example, different vibrations may be combined and output or may be sequentially output.

The haptic module 154 may generate a variety of haptic effects including an effect of stimulus according to an arrangement of pins vertically moving against a contact skin surface, an effect of stimulus according to a jet force or sucking force of air through a jet hole or a sucking hole, an effect of stimulus of rubbing the skin, an effect of stimulus according to contact of an electrode, an effect of stimulus using an electrostatic force, and an effect according to a reproduction of cold and warmth using an element capable of absorbing or radiating heat in addition to vibrations.

The haptic module 154 may not only transmit haptic effects through direct contact but may also allow the user to feel haptic effects through a kinesthetic sense of the user's fingers or arms. The mobile terminal 100 may also include a plurality of haptic modules 154.

The memory 160 may store a program for operations of the controller 180 and/or temporarily store input/output data such as a phone book, messages, still images, and/or moving images. The memory 160 may also store data about vibrations and sounds in various patterns that are output from when a touch input is applied to the touch screen.

The memory 160 may include at least a flash memory, a hard disk type memory, a multimedia card micro type memory, a card type memory, such as SD or XD memory, a random access memory (RAM), a static RAM (SRAM), a read-only memory (ROM), an electrically erasable programmable ROM (EEPROM), a programmable ROM (PROM) magnetic memory, a magnetic disk and/or an optical disk. The mobile terminal 100 may also operate in relation to a web storage that performs a storing function of the memory 160 on the Internet.

The interface 170 may serve as a path to external devices connected to the mobile terminal 100. The interface 170 may receive data from the external devices or power and transmit the data or power to internal components of the mobile terminal 100 or transmit data of the mobile terminal 100 to the external devices. For example, the interface 170 may include a wired/wireless headset port, an external charger port, a wired/wireless data port, a memory card port, a port for connecting a device having a user identification module, an audio I/O port, a video I/O port, and/or an earphone port.

The interface 170 may also interface with a user identification module that is a chip that stores information for authenticating authority to use the mobile terminal 100. For example, the user identification module may be a user identify module (UIM), a subscriber identify module (SIM) and/or a universal subscriber identify module (USIM). An identification device (including the user identification module) may also be manufactured in the form of a smart card. Accordingly, the identification device may be connected to the mobile terminal 100 through a port of the interface 170.

The interface 170 may also be a path through which power from an external cradle is provided to the mobile terminal 100 when the mobile terminal 100 is connected to the external cradle or a path through which various command signals input by the user through the cradle are transmitted to the mobile terminal 100. The various command signals or power input from the cradle may be used as signals for confirming whether the mobile terminal 100 is correctly set in the cradle.

The controller 180 may control overall operations of the mobile terminal 100. For example, the controller 180 may perform control and processing for voice communication, data communication and/or video telephony. The controller 180 may also include a multimedia module 181 for playing multimedia. The multimedia module 181 may be included in the controller 180 or may be separated from the controller 180.

The controller 180 may perform a pattern recognition process capable of recognizing handwriting input or picture-drawing input applied to the touch screen as characters or images. The power supply 190 may receive external power and internal power and provide power required for operations of the components of the mobile terminal 100 under control of the controller 180.

According to hardware implementation, embodiments may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and/or electrical units for executing functions. Embodiments may be implemented by the controller 180.

According to software implementation, embodiments such as procedures or functions may be implemented with a separate software module that executes at least one function or operation. Software codes may be implemented according to a software application written in an appropriate software language. The software codes may be stored in the memory 160 and executed by the controller 180.

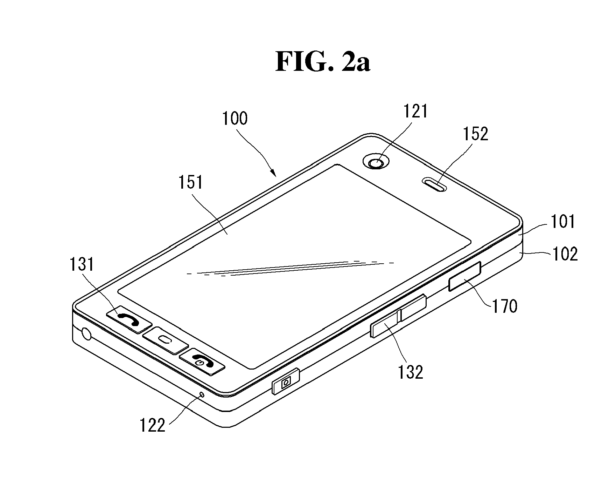

FIG. 2A is a front perspective view of a mobile terminal (or a handheld terminal) according to an embodiment.

The mobile terminal 100 may be a bar type terminal body. However, embodiments are not limited to a bar type terminal and may be applied to terminals of various types including slide type, folder type, swing type and/or swivel type terminals having at least two bodies that are relatively movably combined.

The terminal body may include a case (a casing, a housing, a cover, etc.) that forms an exterior of the mobile terminal 100. In this embodiment, the case may be divided into a front case 101 and a rear case 102. Various electronic components may be arranged in the space formed between the front case 101 and the rear case 102. At least one middle case may be additionally provided between the front case 101 and the rear case 102.

The cases may be formed of plastics through injection molding or made of a metal material such as stainless steel (STS) or titanium (Ti).

The display 151, the audio output unit 152, the camera 121, the user input unit 130/131 and 132, the microphone 122 and the interface 170 may be arranged (or provided) in the terminal body, and more specifically may be arranged (or provided) in the front case 101.

The display 151 may occupy most of the main face of the front case 101. The audio output unit 152 and the camera 121 may be arranged in a region in proximity to one of both ends of the display 151 and the user input unit 131, and the microphone 122 may be located in a region in proximity to another end of the display 151. The user input unit 132 and the interface 170 may be arranged (or provided) on sides of the front case 101 and the rear case 102.

The user input unit 130 may receive commands for controlling operation of the mobile terminal 100, and may include a plurality of operating units 131 and 132. The operating units 131 and 132 may be referred to as manipulating portions and may employ any tactile manner in which a user operates the operating units 131 and 132 while having tactile feeling.

The first and second operating units 131 and 132 may receive various inputs. For example, the first operating unit 131 may receive commands such as start, end and scroll and the second operating unit 132 may receive commands such as control of a volume of sound output from the audio output unit 152 or conversion of the display 151 to a touch recognition mode.

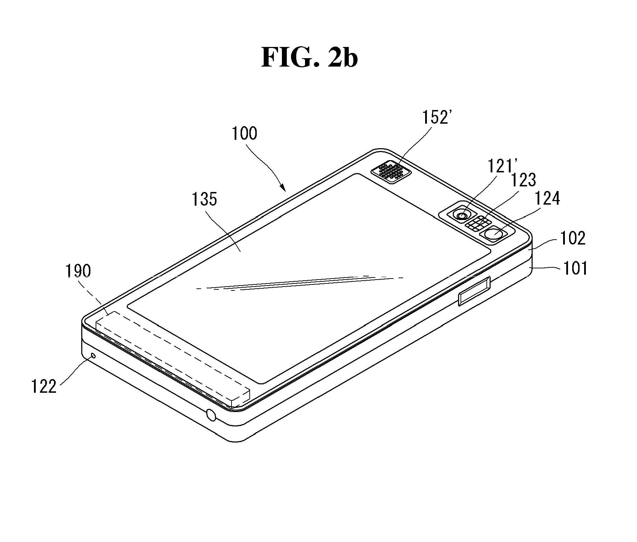

FIG. 2B is a rear perspective view of the mobile terminal (shown in FIG. 2A) according to an embodiment.

Referring to FIG. 2A, a camera 121' may be additionally attached to the rear side of the terminal body (i.e., the rear case 102). The camera 121' may have a photographing direction opposite to that of the camera 121 (shown in FIG. 2A) and may have pixels different from those of the camera 121 (shown in FIG. 2A).

For example, it may be desirable that the camera 121 has low pixels such that the camera 121 may capture an image of a face of a user and transmit the image to a receiving part in case of video telephony while the camera 121' has high pixels because the camera 121' captures an image of a general object and does not immediately transmit the image in many cases. The cameras 121 and 121' may be attached (or provided) to the terminal body such that the cameras 121 and 121' may rotate or pop-up.

A flash bulb 123 and a mirror 124 may be additionally provided in proximity to the camera 121'. The flash bulb 123 may light an object when the camera 121' takes a picture of the object. The mirror 124 may be used for the user to look at his/her face in the mirror when the user wants to self-photograph himself/herself using the camera 121'.

An audio output unit 152' may be additionally provided on the rear side of the terminal body. The audio output unit 152' may achieve a stereo function with the audio output unit 152 (shown in FIG. 2A) and may be used for a speaker phone mode when the terminal is used for a telephone call.

A broadcasting signal receiving antenna may be additionally attached (or provided) to the side of the terminal body in addition to an antenna for telephone calls. The antenna constructing a part of the broadcasting receiving module 111 (shown in FIG. 1) may be set in the terminal body such that the antenna may be pulled out of the terminal body.

The power supply 190 for providing power to the mobile terminal 100 may be set in the terminal body. The power supply 190 may be included in the terminal body or may be detachably attached to the terminal body.

A touch pad 135 for sensing touch may be attached to the rear case 102. The touch pad 135 may be of a light transmission type, such as the display 151. In this example, if the display 151 outputs visual information through both sides thereof, the visual information may be recognized (or determined) by the touch pad 135. The information output through both sides of the display 151 may be controlled by the touch pad 135. Otherwise, a display may be additionally attached (or provided) to the touch pad 135 such that a touch screen may be arranged (or provided) even in the rear case 102.

The touch pad 135 may operate in connection with the display 151 of the front case 101. The touch pad 135 may be located in parallel with the display 151 behind the display 151. The touch panel 135 may be identical to or smaller than the display 151 in size.

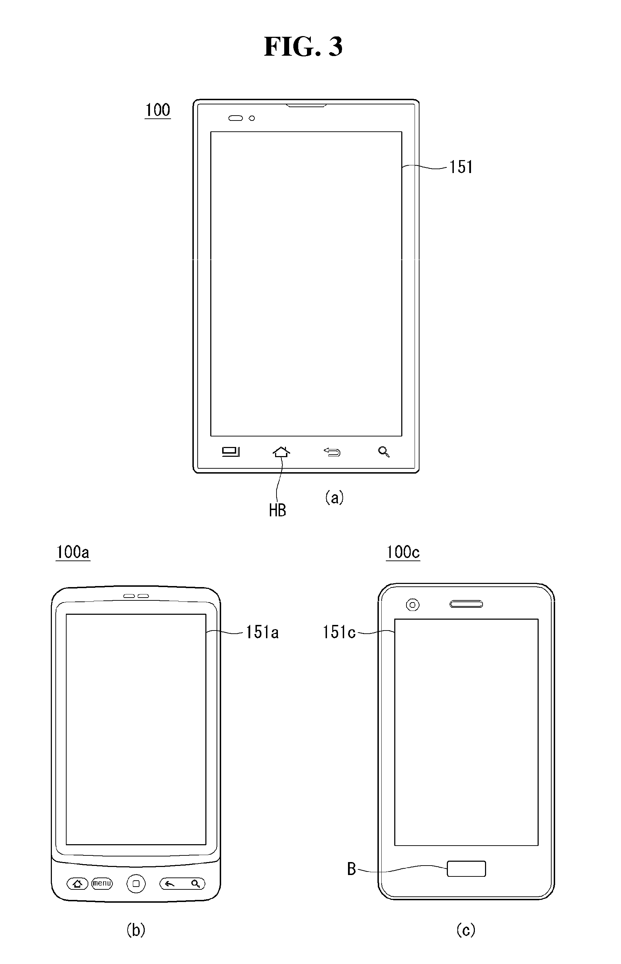

FIG. 3 illustrates exemplary mobile terminals according to an embodiment of the present invention.

As shown in FIG. 3, the present invention can be applied to mobile terminals 100, 100a and 100c having various forms.

Referring to FIG. 3(a), the mobile terminal 100a may include a large display 151. For example, the present invention can be applied to the mobile terminal 100 in a size such that the user cannot touch the display 151 with a hand gripping the mobile terminal 100.

The mobile terminal 100 may be provided with buttons including a home button HB. The home button HB may be constructed to sense a touch using a finger, like a touchpad. The home button HB lights up when touched, and thus a user can easily recognize that the home button HB is touched.

Referring to FIG. 3(b), the mobile terminal 100a may include the display 151a in a conventional form. For example, the present invention can be applied to the mobile terminal 100a in a size such that the user can touch the display 151a with a hand gripping the mobile terminal 100a.

Referring to FIG. 3(c), the mobile terminal 100c may include an external button B. The external button B may be a physical button operating in a push direction when pushed by a finger. Accordingly, the user can operate the external button B by pushing the same while feeling the external button B through a finger in a haptic manner.

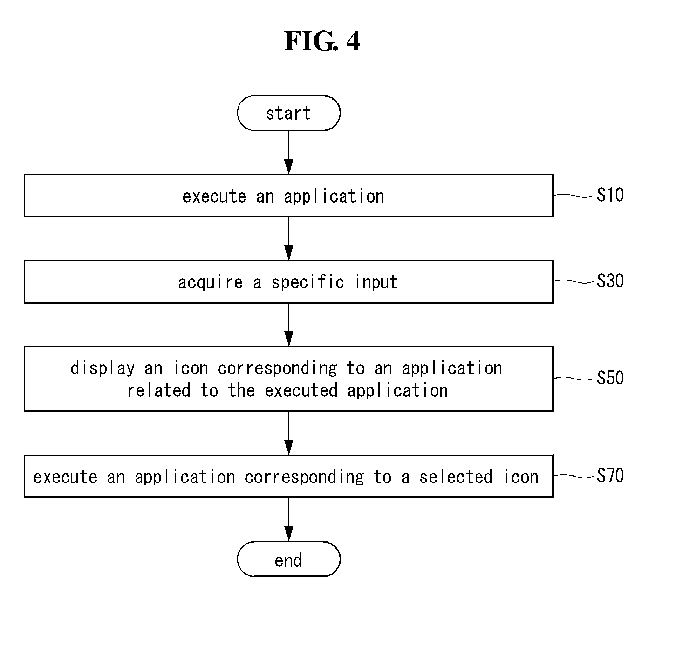

FIG. 4 is a flowchart illustrating operations of the mobile terminal shown in FIG. 1.

As shown in FIG. 4, the controller 180 of the mobile terminal 100 may execute an application (S10).

Applications may be executed for various purposes in the mobile terminal 100. For example, a video play application can be executed to play a video, a gallery application can be executed to display a still image, or an email application can be executed to create an email.

A plurality of applications can be simultaneously executed. That is, multi-tasking can be performed. When the plurality of applications is simultaneously executed, a specific application may be executed on the foreground and other applications may be executed on the background. For example, it can be considered that an application displayed on the display 151 is executed on the foreground and an application that is not displayed on the display 151 is executed on the background. However, foreground execution and background execution are not discriminated from each other according to display.

The mobile terminal 100 may acquire a specific input (S30).

The specific input may include an input through the display 151 of the mobile terminal 100, an input through the home button HB provided to the external area of the display 151, and an input through the external button B provided to the mobile terminal 100.

The specific input may be different from a conventional input applied to a button or a menu. For example, the specific input can be a long touch applied to the home button HB for a predetermined time or longer. The controller 180 may perform an operation of moving to a specific page set as a home when a short touch is applied to the home button HB and execute an operation according to an embodiment of the present invention when a long touch is applied to the home button HB.

The specific input may be multi-touch applied to a button or a menu. For example, the specific input can correspond to an operation of consecutively touching a button or a menu twice or more in a row.

An icon corresponding to an application related to the executed application may be displayed (S50).

The controller 180 can display an icon of an application related to the executed application. The related application may be an application that shares content used in the executed application, has a predetermined link with the executed application, or is set by the user.

Sharing content means that the executed application and the related application share specific content. For example, if the gallery application displaying images is currently executed, an image can be content. The email application can generate an email to which an image is attached. Accordingly, the email application can be a related application of the gallery application.

A predetermined link may exist between applications when content of the applications are related to each other although the applications do not share the content. For example, a user who uses an SNS application is likely to use the calendar application. That is, the user may perform activity of setting an appointment with a specific person when using the SNS application. In this case, the user may use the calendar application to check a schedule.

Setting a related application by a user may correspond to a case in which a specific application and other application are grouped by necessity of the user. For example, if the user tends to execute a specific game application after using a subway using a subway line application, the subway line application and the specific game application can be set to related applications.

A plurality of related applications may exist. For example, a camera application and the SNS application in addition to the email application can be provided as related applications of the gallery application.

The controller 180 can display icons of related applications. For example, if there are applications A, B and C corresponding to the executed application, the controller 180 can display three icons by which the applications A, B and C can be executed on the display 151.

The icon may be displayed in various manners. For example, the icons can be displayed at the bottom of the display 151 in a row or displayed on a separate screen. An icon display method will be described in detail below.

An application corresponding to a selected icon may be executed (S70). That is, when at least one specific icon is selected from the displayed icons, the controller 180 can execute an application corresponding to the selected specific icon. The executed application may be the aforementioned related application.

When the related application is executed, the mobile terminal 100 is in a state that a plurality of applications is simultaneously executed. That is, a plurality of applications is multi-tasked. The controller 180 can execute at least one specific application from among the plurality of applications on the foreground and execute remaining one or more applications on the background.

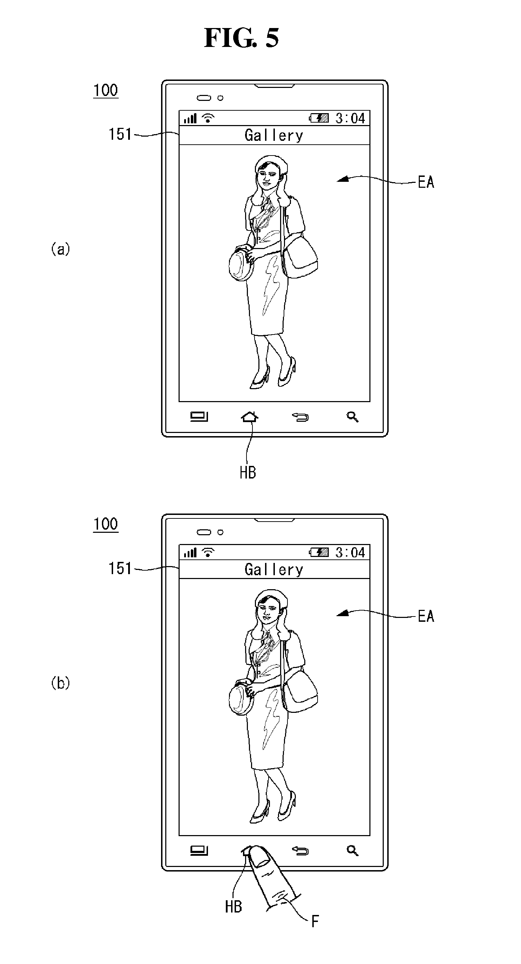

FIGS. 5 to 7 show images displayed according to the operations of the mobile terminal shown in FIG. 4.

As shown in FIGS. 5 to 7, the controller 180 can execute a related application RA relating to an executed application EA currently executed upon acquiring a specific input.

Referring to FIG. 5(a), an image may be displayed on the display 151 according to execution of the gallery application. That is, the gallery application may be an executed application EA.

Referring to FIG. 5(b), the user may apply an input of selecting the home button HB using a finger F. The input applied to the home button HB may be a long touch input applied to the home button HB for a predetermined time or longer. The controller 180 may perform different operations depending on the forms of inputs of the user. For example, the controller performs an operation of moving to a home screen from among a plurality of screens when a short touch input is applied to the home button HB and displays an icon RI corresponding to the related application RA when a long touch input is applied to the home button HB.

A function related to the related application RA is executed when the home button HB is selected in the following description for easy understanding. However, the function is not executed only by a touch applied to the home button HB. For example, the function can be executed when a specific region of the display 151, e.g., the external button (B of FIG. 3) is selected, as described above.

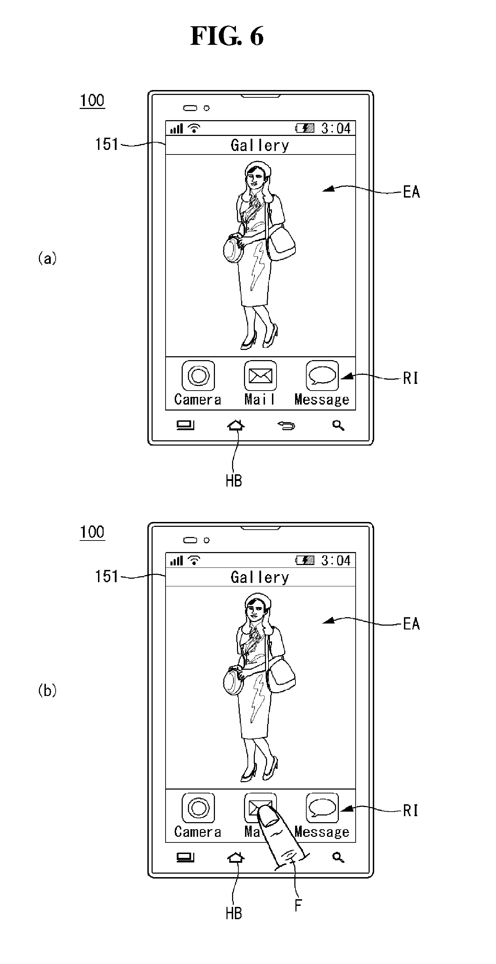

Referring to FIG. 6(a), the controller 180 can display related icons RI upon receiving a specific input applied to the home button HB.

The related icons RI may be icons by which corresponding related applications RA are executed. When the related icons RI are displayed, the user can immediately recognize applications related to the executed application EA. Furthermore, the user can rapidly execute a specific related application RA by selecting a related icon IC corresponding to the specific related application RA.

Referring to FIG. 6(b), the user can select a specific icon from the displayed related icons RI using a finger F.

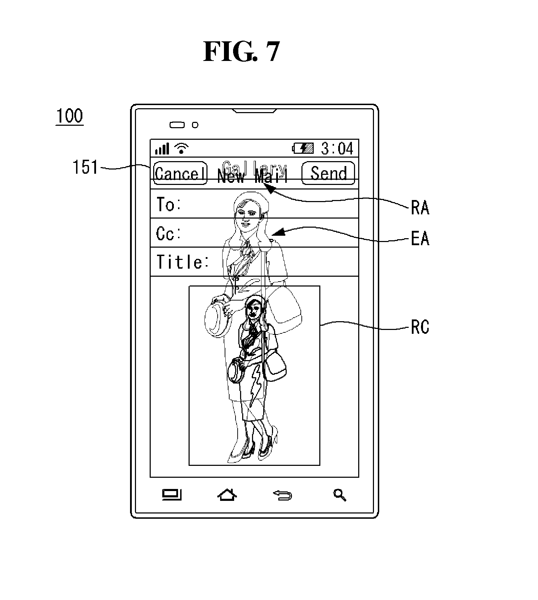

Referring to Fig. 7, upon selection of the specific icon, the controller 180 can execute a related application RA corresponding to the specific icon. For example, the controller 180 can execute the email application corresponding to the icon selected by the user. The controller 180 can display the related application RA such that the related application RA overlaps the executed application EA being executed on the display 151. The executed application EA is visible even when the related application RA superimposed thereon is executed. That is, the related application RA can be displayed in a translucent manner. For example, a letter part of the related application RA can be displayed in a translucent or transparent manner and a part of the related application RA on which no information is written can be displayed in a transparent manner. The related application RA and the executed application EA may be displayed on different layers, which will be described in detail below.

The controller 180 can control related content RC to be used in the related application RA. For example, an image displayed according to the gallery application corresponding to an executed application EA can be attached to an email generated by the email application corresponding to a related application RA. When a related application RA sharing content with an executed application EA is executed, the content can be automatically used to as to improve user convenience.

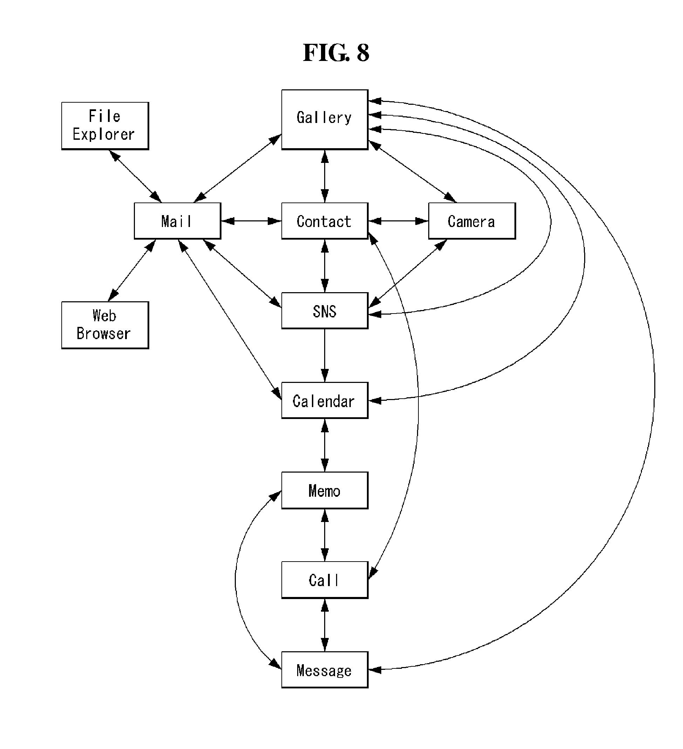

FIG. 8 illustrates relations among applications of the mobile terminal of FIG. 4.

Referring to FIG. 8, the controller 180 of the mobile terminal 100 may include information on connection between applications.

The connection information may represent an application related to a specific application. For example, the connection information can include information about applications which can share content, information about applications having a link established therebetween, information about applications which are related to each other by the user, etc.

The controller 180 can display related icons RI based on the connection information. For example, since the gallery application is relevant to the email application, contact application, camera application, calendar application and message application, the controller 180 can display an icon corresponding to the email application during execution of the gallery application.

An application may be related to a plurality of applications. For example, the SNS application may be related to the email application, contact application, camera application and calendar application. In this case, while the calendar application may be a related application when the SNS application is executed, the SNS application may not be a related application when the calendar application is executed. That is, applications may have one-way relation therebetween.

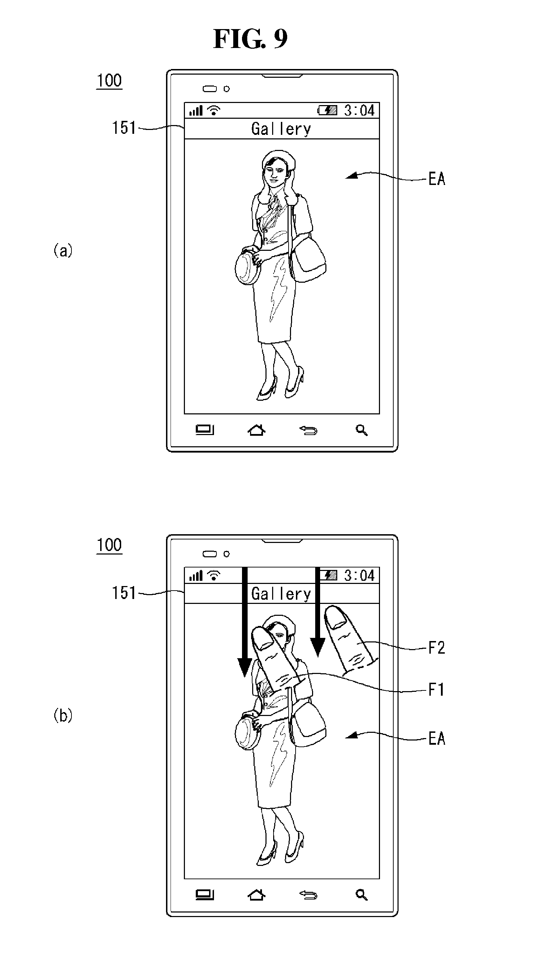

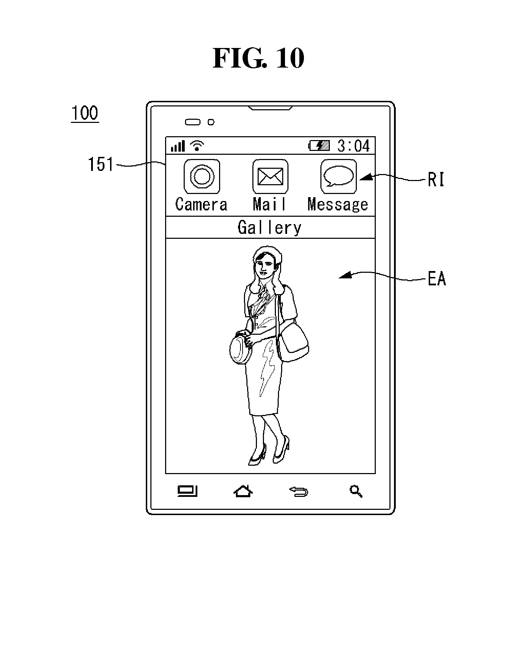

FIGS. 9 and 10 illustrate a method of displaying related icons in the operations of the mobile terminal, shown in FIG. 4.

As shown in FIGS. 9 and 10, the controller 180 of the mobile terminal 100 can display related icons RI upon acquiring a specific input applied to the display 151.

Referring to FIG. 9(a), the gallery application can be displayed as an executed application EA on the display 151.

Referring to FIG. 9(b), the user can apply a downward touch input to the display 151. The touch input may be different from a normal touch input. For example, the touch input can be a touch operation using first and second fingers F1 and F2, whereas the normal touch input uses only the first finger F1. In addition, the touch input is applied to a region different from a region to which the normal touch input is applied. For example, the touch input is applied downward from the top end of the display 151 while the normal touch input is applied to near the center of the display 151 on which content is displayed.

Referring to FIG. 10, when a touch input in a predetermined pattern and/or position, different from a normal touch input pattern and/or position, is applied, the controller 180 can display related icons RI associated with the executed application EA. The related icons RI may be displayed in a region corresponding to the position to which the touch input is applied. For example, if the touch input is applied to the top of the display 151, the related icons RI can be displayed at the top of the display 151. If the touch input is applied to the bottom of the display 151, the related icons RI can be displayed at the bottom of the display 151.

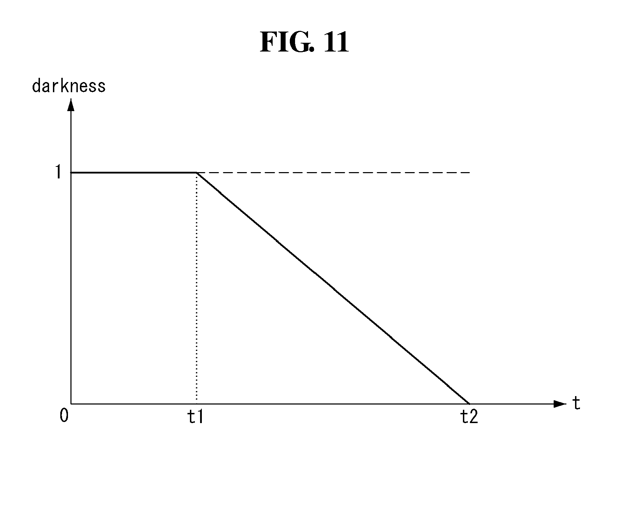

FIGS. 11 to 18 illustrate a method of displaying related icons in the operations of the mobile terminal shown in FIG. 4 according to another embodiment of the present invention.

As shown in FIGS. 11 to 18, the controller 180 of the mobile terminal 100 can display related icons RI in various forms to improve user convenience for the mobile terminal 100.

Referring to FIG. 11, the controller 180 can control the darkness of the related icons RI to gradually decrease with time. That is, the displayed related icons RI are maintained in an initial display state from when the related icons are initially displayed to time t1 and then become dim at a predetermined rate after t1. The related icons RI may disappear from the display 151 at t2. In this case, the user can see the executed application EA displayed on the display 151 without being obstructed by the related icons RI since the related icons RI become dim and finally disappear while the user can recognize presence of the related application RA related to the executed application EA.

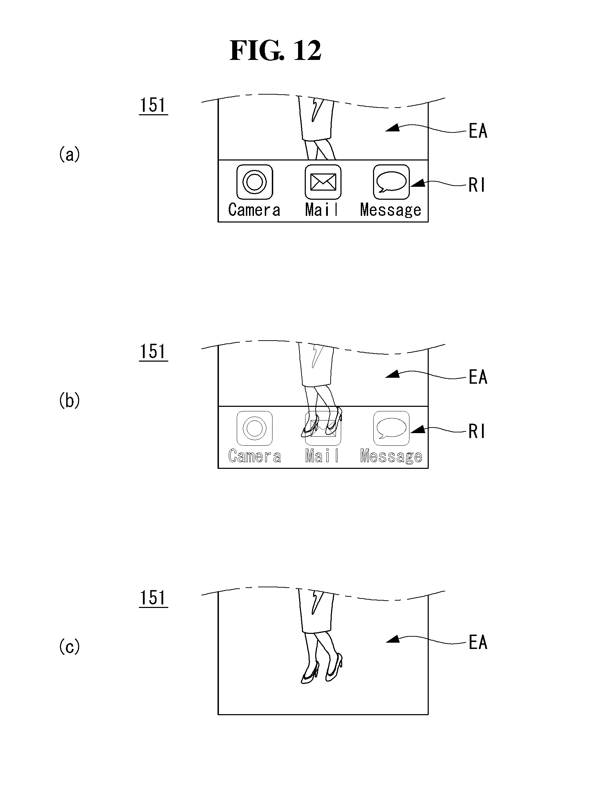

Referring to FIG. 12(a), the related icons RI may be displayed on the display 151. The related icons RI can be displayed when the user selects the home button HB, for example. The related icons RI can be clearly displayed when initially displayed.

Referring to FIG. 12(b), the displayed related icons RI may become gradually dim with time. In this case, the executed application EA previously displayed on the display 151 can be seen through the related icons RI that become dim. The user can select a specific one of the related icon RI when the related icons RI are displayed while becoming dim. The controller 180 can execute a related application RA corresponding to the selected related icon RI.

Referring to FIG. 12(c), the related icons RI may disappear from the display 151 at a specific time. In this case, the user cannot select the related icons RI any more.

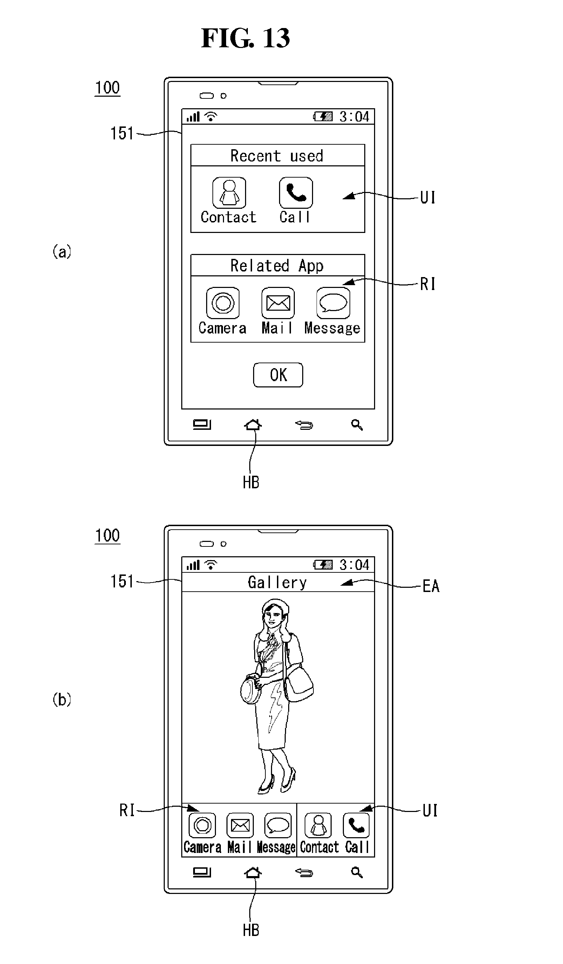

Referring to FIG. 13(a), upon selection of the home button HB, the controller 180 can display recent application icons UI and related icons RI on the display 151. The recent application icons UI can represent applications executed in the mobile terminal 100 according to selection operations of the user in chronological order. The related icons RI can indicate applications related to the executed application EA. The recent application icons UI and the related icons RI can be displayed in separate pages on the display 151. For example, when the home button HB is selected, the screen on which the executed application EA is executed is changed to a screen on which the recent application icons UI and the related icons RI are displayed. Since the recent application icons UI and the related icons RI are displayed in separate pages, visibility and/or selectivity of the applications corresponding to the recent application icons UI and the related icons RI can be improved.

Referring to FIG. 13(b), the related icons RI and the recent application icons UI can be displayed on the same screen displaying the executed application EA. That is, the related icons RI and the recent application icons UI can be displayed at the bottom of the display 151 on which the executed application EA is displayed. In this case, the user can acquire related information while continuously seeing the executed application EA.

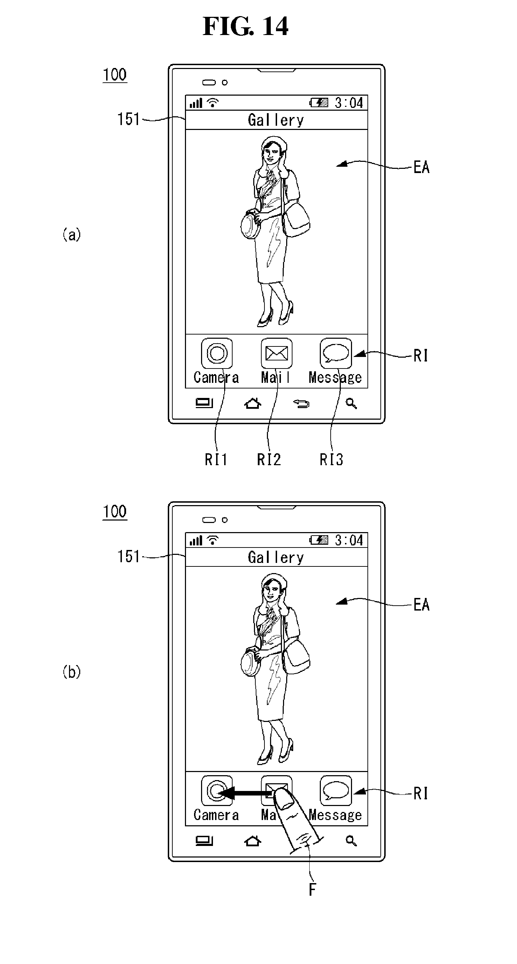

Referring to FIG. 14(a), the executed application EA and the related icons RI may be displayed on the display 151. For example, the related icons RI can be displayed at the bottom of the display 151. The related icons RI may include first, second and third icons RI1, RI2 and RI3 related to the executed application EA. Three or more related icons may be present. However, three related icons RI may be displayed because the physical display area of the display 151 is restricted.

Referring to FIG. 14(b), the user can touch the related icons RI using a finger F. For example, the user can touch the related icons RI to the left or to the right.

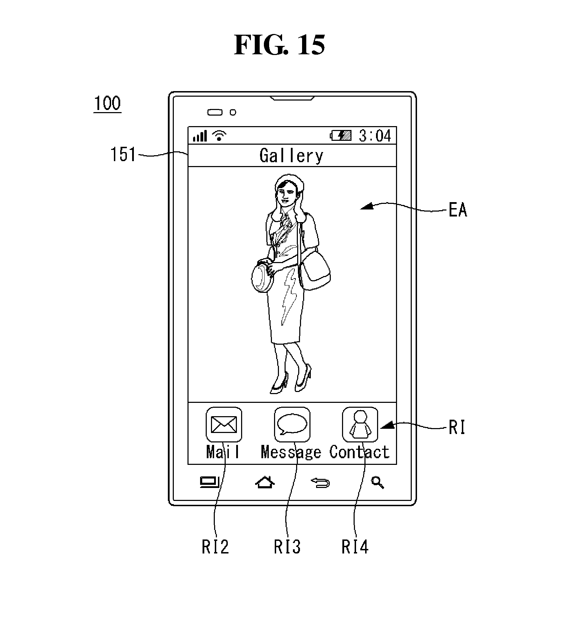

Referring to FIG. 15, when a user touch is input to the related icons RI, display of the related icons RI may be changed. For example, while the first, second and third related icons RI1, RI2 and RI3 are initially displayed, some of the related icons RI are scrolled according to the touch input such that second, third and fourth related icons RI2, RI3 and RI4 can be displayed.

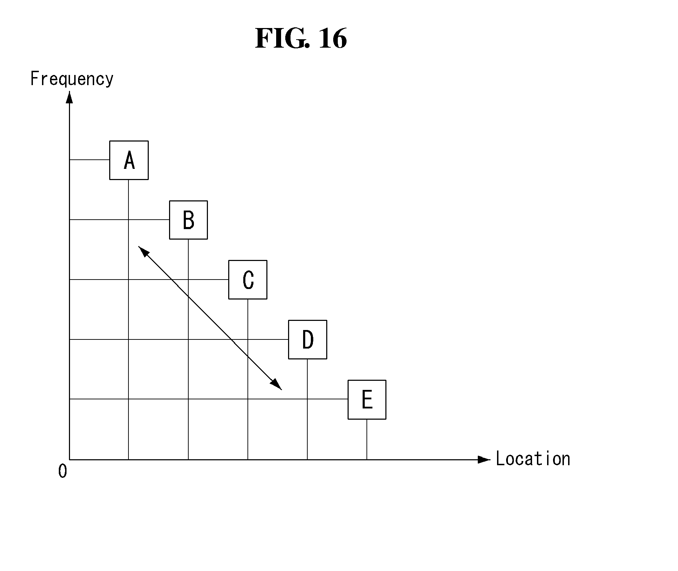

Referring to FIG. 16, locations of the related icons RI may be determined according to a specific standard. For example, the specific standard can be frequency. The frequency can be calculated on the basis of the number of executions of a corresponding application, a degree of relation between the application and an executed application EA, etc.

An icon having high frequency may be displayed differently from an icon having low frequency. For example, if there are related icons A to E, icon A having relatively high frequency can be located in a position selected more easily than other icons.

The frequency may be a standard by which icons to be displayed are selected. For example, if only three icons can be displayed due to restriction on the physical display area of the display 151 although five related icons RI are present, three icons can be displayed in order of frequency.

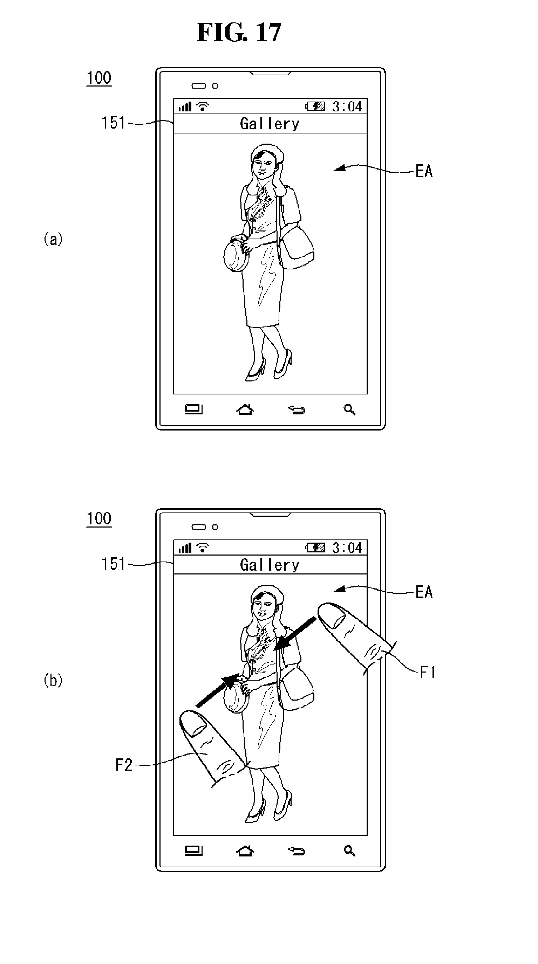

Referring to FIG. 17(a), the executed application EA may be displayed on the display 151.

Referring to FIG. 17(b), the user can perform a multi-touch operation on the display 151 using first and second fingers F1 and F2. For example, the user can apply a pinch-in multi-touch to the display 151.

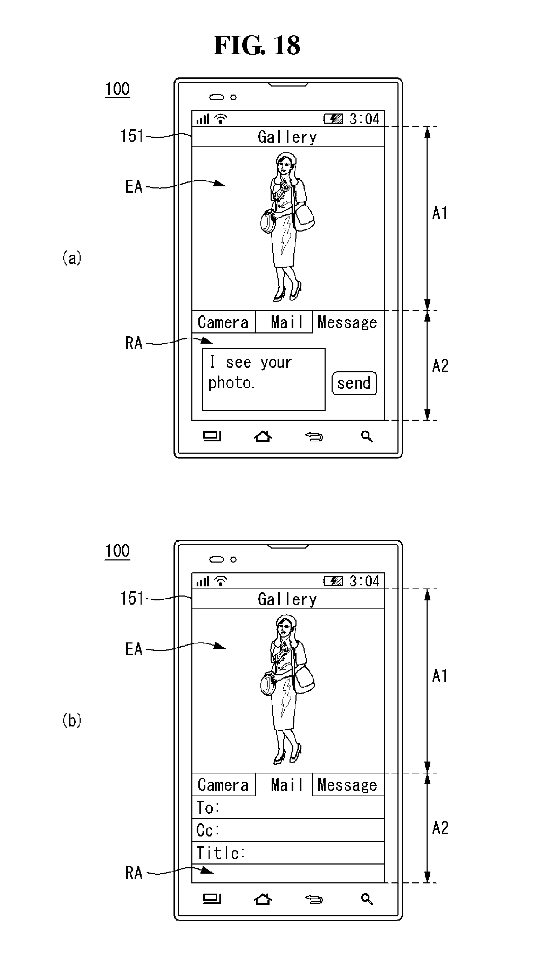

Referring to FIG. 18(a), upon the pinch-in multi-touch operation, the executed application EA can be displayed in a first area A1 of the display 151 and a related application RA can be displayed in a second area A2 of the display 151.

The controller 180 can display the second area A2 when the length of the pinch-in multi-touch is longer than a critical length. For example, the controller 180 can reduce the display area of the executed application EA when the length of the pinch-in multi-touch corresponds to a first length and display the related application RA in the second area A2 when the length of the pinch-in multi-touch corresponds to a second length longer than the first length.

The related application RA may be displayed in the form of a tab. That is, the related application RA can be executed by selecting a tab indicating the name of the related application RA. For example, if the user wants to select the message application related to the gallery application, the user can select a message tab. The user can input a message, or drag an image of the gallery application and drop the image to the message application after selecting the message application. Since the executed application EA and the related application RA are displayed on one screen, the user can perform related operations conveniently.

Referring to FIG. 18(b), the user can execute a different related application RA by selecting a different tab.

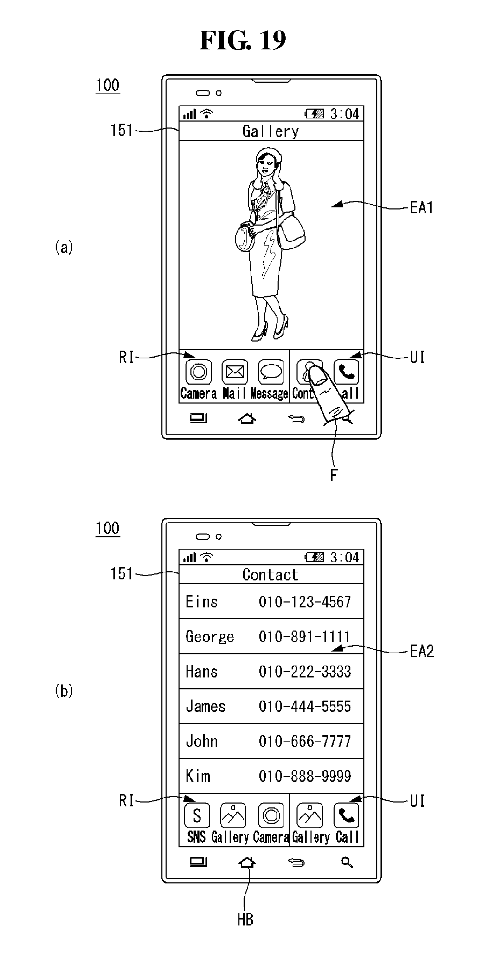

FIG. 19 illustrates a method of changing display of related icons in the mobile terminal of FIG. 4.

As shown in FIG. 19, related icons RI can be changed according to currently executed application.

Referring to FIG. 19(a), a first executed application EA1 may be displayed on the display 151, and related icons RI and recent application icons UI may be displayed at the bottom of the display 151. The related icons RI corresponding to the first executed application EA1 may include a camera icon, an email icon and a message icon. The recent application icons UI may include a contact icon and a call icon. The user can select the contact icon from the recent application icons UI using a finger F.

Referring to FIG. 19(b), upon selection of the contact icon, a contact application corresponding to a second executed application EA2 can be displayed on the display 151. When the first executed application EA1 is changed to the second executed application EA2 in this manner, the icons RI related to the first executed application EA1 can be changed to icons related to the second executed application EA2. That is, the controller 180 can change related icons RI displayed on the display 151 according to the currently executed application. Furthermore, the recent application icons UI can also be changed to new icons.

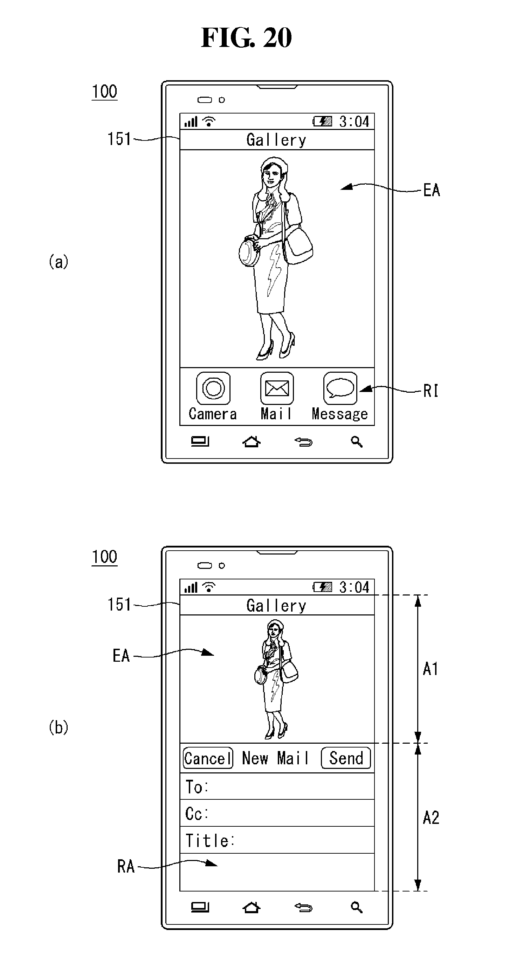

FIGS. 20 to 28 illustrate various display forms of an executed application and a related application in the mobile terminal of FIG. 4.

As shown in FIGS. 20 to 28, the controller 180 of the mobile terminal 100 can display the executed application EA and the related application RA in various manners.

Referring to FIG. 20(a), the executed application EA may be displayed on the display 151.

Referring to FIG. 20(b), the related application RA selected according to user input can be displayed on the display 151. In this case, the executed application EA can be displayed in the first area A1 and the related application RA can be displayed in the second area A2. That is, the executed application EA and the related application RA can be displayed in predetermined areas of the display 151. Since the executed application EA and the related application RA are respectively displayed in the first and second areas A1 and A2 in a tile form without overlapping each other, the user can use the applications conveniently.

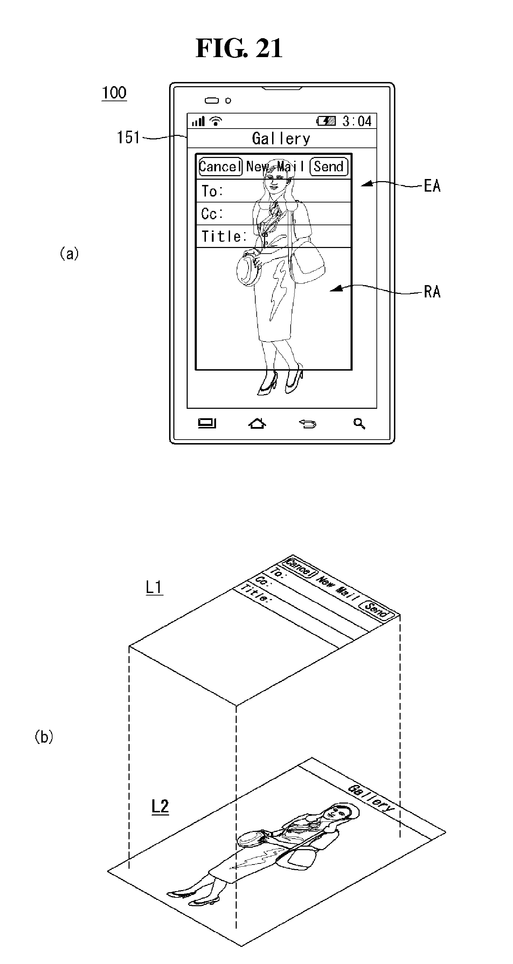

Referring to FIG. 21(a), the controller 180 can display the executed application EA and the related application RA in a superimposed manner. For example, the newly selected related application RA can be superimposed on the previously selected executed application EA. Even when the related application RA is superimposed on the executed application EA, the executed application EA can be seen through the related application RA. That is, the related application RA can be displayed in a translucent or transparent manner.

Referring to FIG. 21(b), the executed application EA and the related application RA may be respectively displayed on a first layer L1 and a second layer L2 conceptually. That is, the executed application EA can be displayed on the first layer L1 which is a lower layer and the related application RA can be displayed on the second layer L2 which is an upper layer.

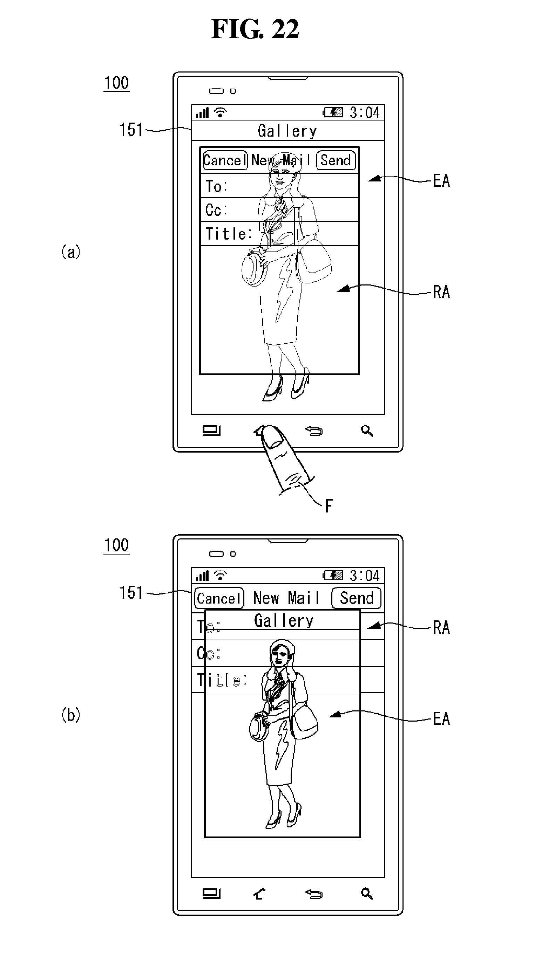

Referring to FIG. 22(a), the user can select a specific button using a finger F.

Referring to FIG. 22(b), upon selection of the specific button by the user, the locations of the executed application EA and the related application RA can be changed. That is, the related application RA is moved to the lower layer and the executed application EA is moved to the upper layer.

When the executed application EA is moved to the upper layer, the executed application EA can be displayed in a translucent or transparent manner. Accordingly, the related application RA can be seen through the executed application EA.

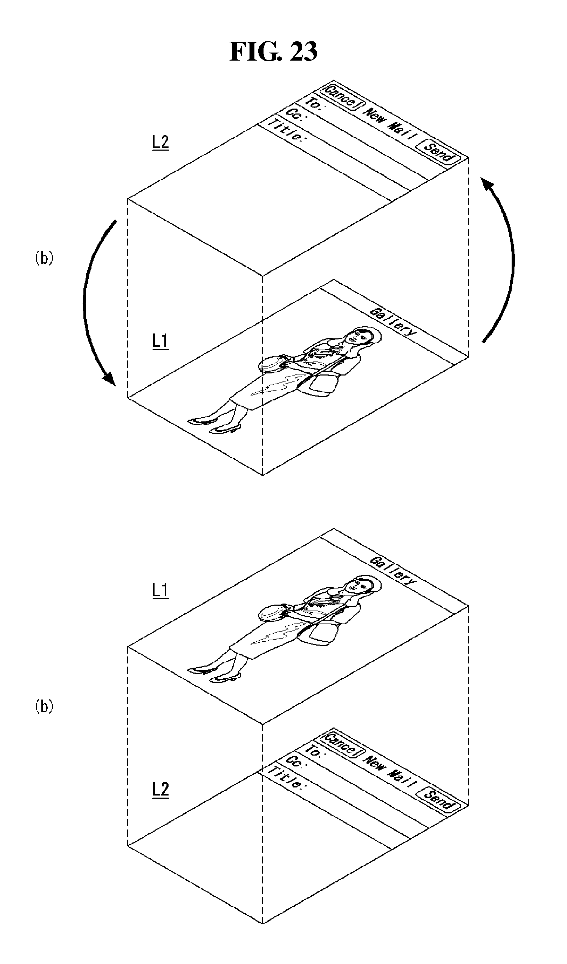

Referring to FIG. 23, change of the locations of the executed application EA and the related application RA can be explained as change of the locations of the first and second layers L1 and L2. For example, the second layer L2 located above the first layer L1, as shown in FIG. 23(a), can be a lower layer positioned under the first layer L1, as shown in FIG. 23(b). The locations of the first and second layers L1 and L2 can be changed such that the user can visually recognize the location change. Furthermore, the upper layer among the first and second layers L1 and L2 can be displayed in a translucent manner, as described above. Accordingly, the lower layer can be seen through the upper layer.

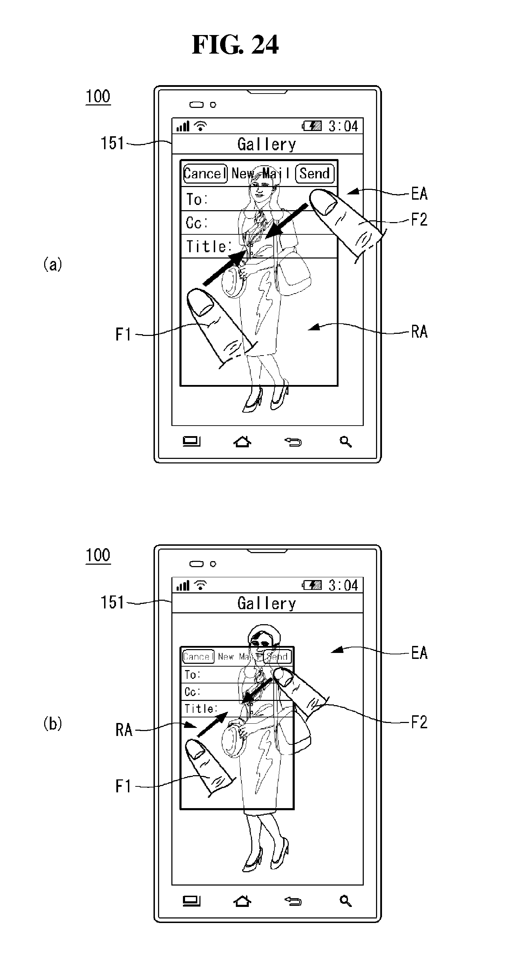

Referring to FIG. 24(a), the user can perform a multi-touch operation using the first and second fingers F1 and F2. For example, the user can perform a pinch-in multi-touch operation.

Referring to FIG. 24(b), the controller 180 can reduce the area of the related application RA upon the pinch-in touch operation.

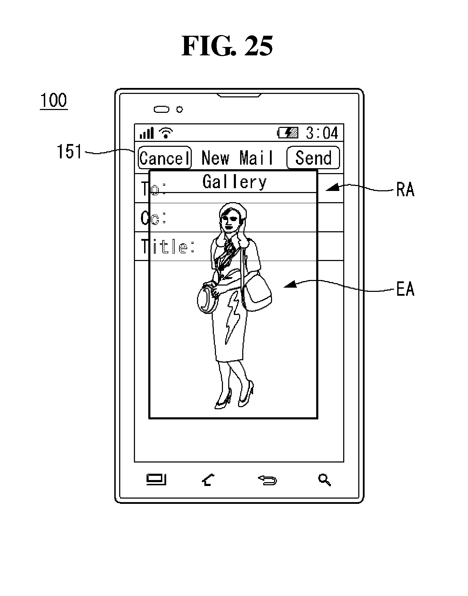

Referring to FIG. 25, when the area of the related application RA is reduced to a predetermined size or smaller according to the pinch-in touch operation of the user, the controller 180 can change the locations of the related application RA and the executed application EA. That is, the controller 180 can move the related application RA located on the upper layer to the lower layer and move the executed application EA) located on the lower layer to the upper layer.

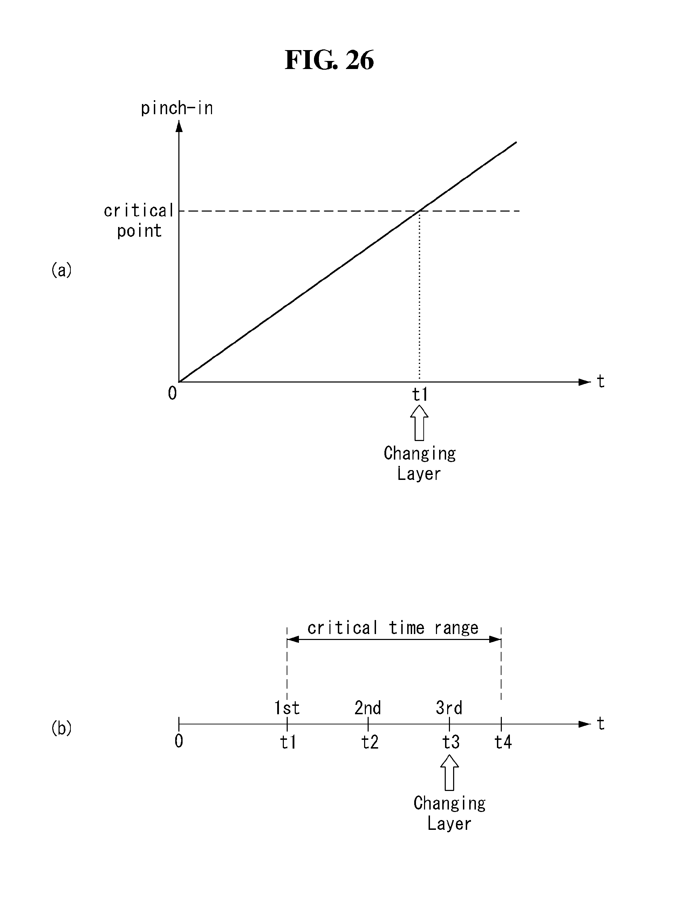

Referring to FIG. 26, changing layer according to touch input may be performed by various standards.

Referring to FIG. 26(a), the controller 180 and change the layers at t1 when the length of the pinch-in touch exceeds a critical point. For example, the controller 180 can change the locations of the related application RA and the executed application EA at the time when the length of pinch-in and drag of the first and second fingers F1 and F2 exceeds the critical point.

Referring to FIG. 26(b), the controller 180 can change the layers when a predetermined number of pinch-in touch operations are performed in a critical time range. For example, the controller 180 can change the locations of the related application RA and the executed application EA when a short-drag pinch-input touch operation is performed three times. In this case, three pinch-in touch operations need to be performed within the critical time range.

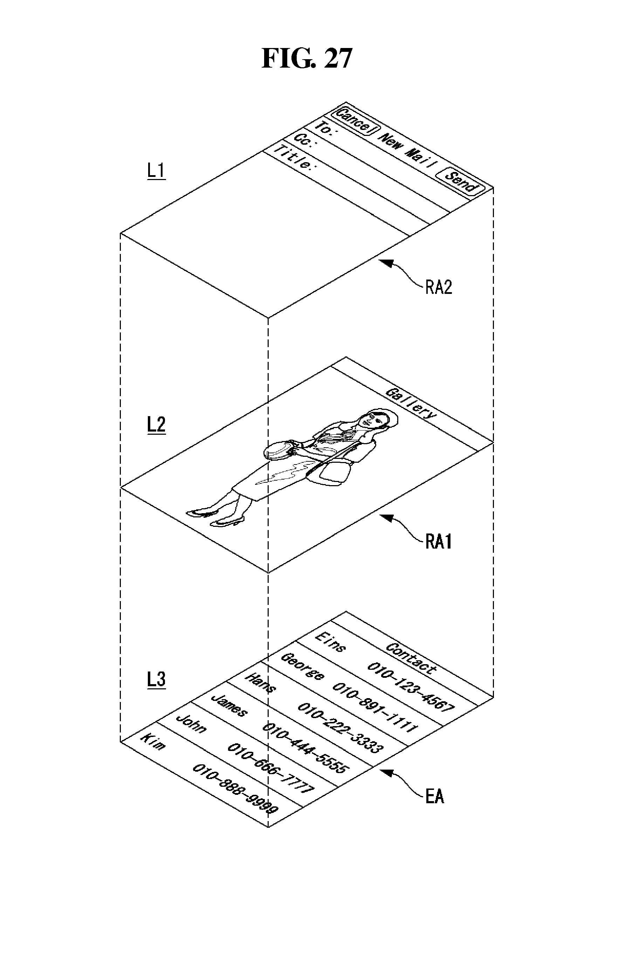

Referring to FIG. 27, three or more layers may exist. For example, an executed application EA can be displayed on a third layer L3, a first related application RA1 can be displayed on a second layer L2, and a second related application RA2 can be displayed on a first layer L1. That is, one application can be displayed on one layer.

When a plurality of related applications RA1 and RA2 are displayed, the related applications RA1 and RA2 may be in various relations with the executed application EA. For example, both the first and second related applications RA1 and RA2 can be related with the executed application EA. Otherwise, the first related application RA1 may correspond to the executed application EA and the second related application RA may correspond to the first related application RA1.

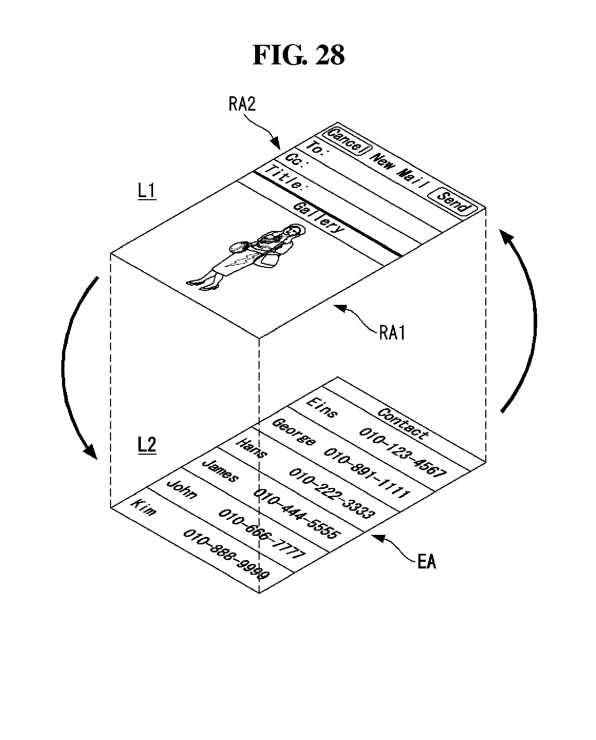

Referring to FIG. 28, a plurality of applications may be displayed on one layer. For example, the first and second related applications RA1 and RA2 can be displayed on the first layer L1. Accordingly, the executed application EA can be displayed full screen and the related applications RA1 and RA2 can be displayed in divided areas. In this case, upon selection of one of the first and second related applications RA1 and RA2, the selected related application RA can be displayed full screen on a separate layer.

The display locations of the first and second layers L1 and L2 can be changed. Specifically, the first layer L1 can be a lower layer and the second layer L2 can be an upper layer. For example, the locations of the layers can be changed upon an operation of touching the display 151 and/or an operation of pushing the home button HB.

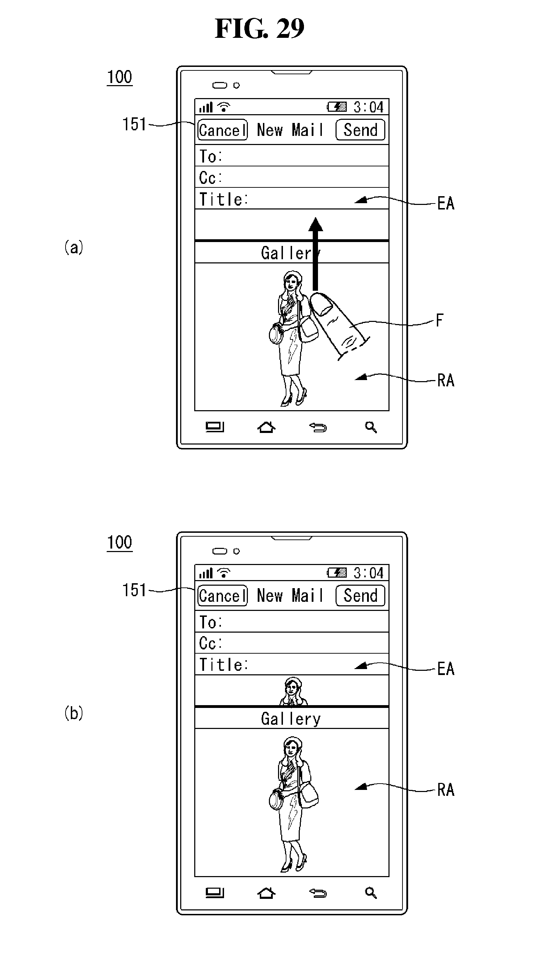

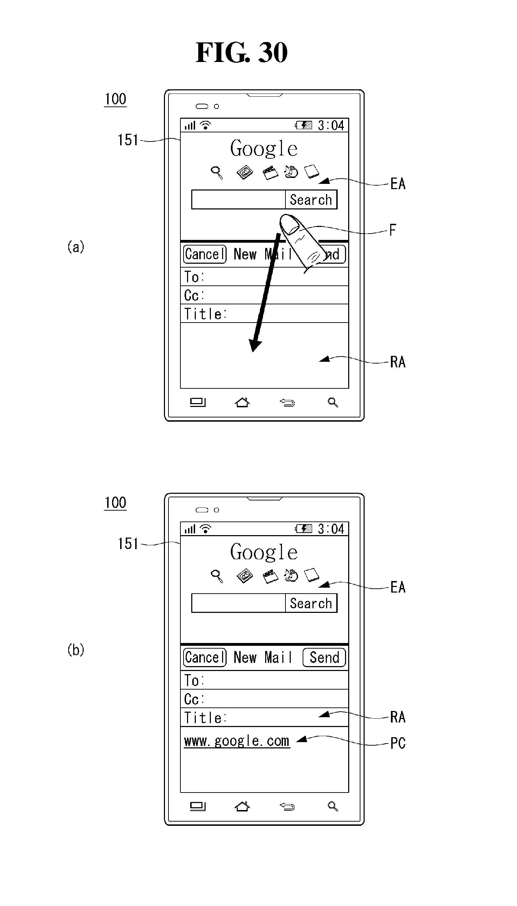

FIGS. 29 and 30 illustrate content exchange between an executed application and a related application in the mobile terminal of FIG. 4.

As shown in FIGS. 29 and 30, the controller 180 of the mobile terminal 100 can control content to be easily exchanged between displayed applications.

Referring to FIG. 29(a), the executed application EA and the related application RA may be displayed on the display 151. The user can perform a drag touch operation in a direction from the related application RA to the executed application EA.

Referring to FIG. 29(b), upon the drag touch operation of the user, the controller 180 can move content of the related application RA to the executed application EA. For example, an image of the related application RA can be moved to the executed application EA and displayed thereon.

Referring to FIG. 30(a), a web page can be displayed as an executed application EA and the email application can be displayed as a related application RA. The user can perform a drag operation in a direction from the web page to the email application.

Referring to FIG. 30(b), upon the drag from the web page, the controller 180 can display the link of the web page on the email. That is, information can be exchanged between the applications in various forms in such a manner that content included in an application is moved to the other application or information relating to the content is displayed on the other application according to the relationship between the applications.

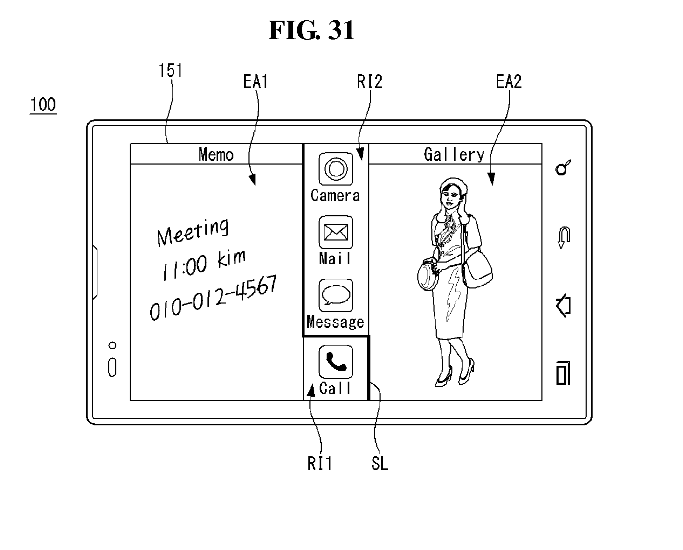

FIG. 31 illustrates the relation between a plurality of executed applications and related icons.

Referring to FIG. 31, the controller 180 of the mobile terminal 100 can execute a plurality of applications on the display 151. For example, the controller 180 can display first and second executed applications EA1 and EA2. In addition, the controller 180 can display icons RI1 and RI2 related to the first and second executed applications EA1 and EA2.

The controller 180 can visually represent that the first related icon RI1 is related to the first executed application EA1 and the second related icon RI2 is related to the second executed application EA2. For example, the controller 180 can display a separating line SL. The separating line SL can be located between the first related icon RI1 and the second related icon RI2 such that the user can easily recognize that the first related icon RI1 is associated with the first executed application EA1 and the second related icon RI2 is associated with the second executed application EA2. That is, the user can intuitively recognize which related icon is associated a specific executed application according to the separating line SL.

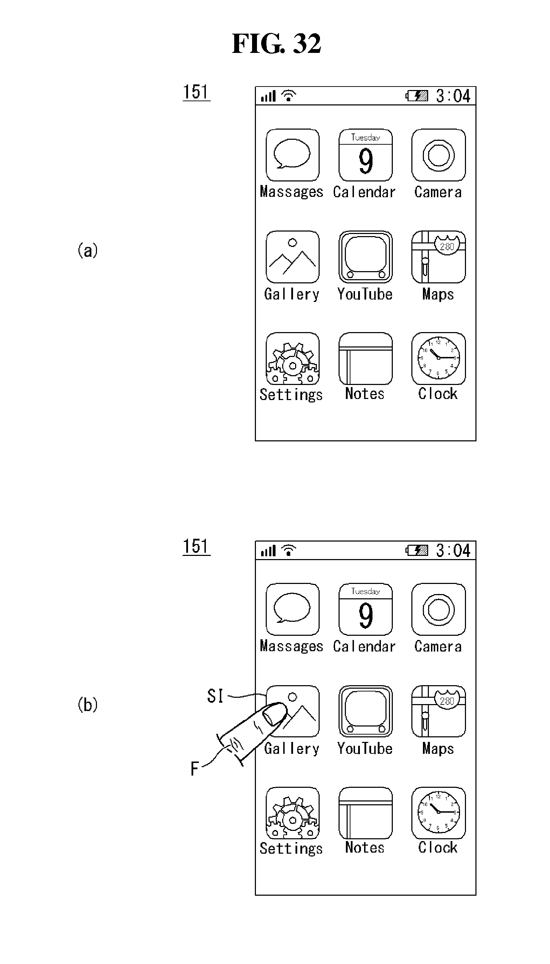

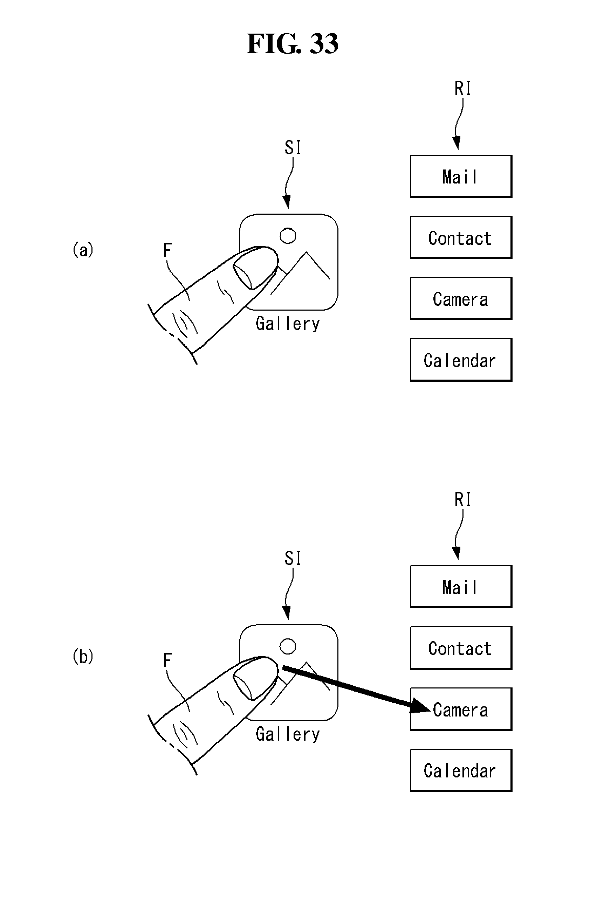

FIGS. 32 and 33 illustrate a method of displaying an application related to a specific icon.

As shown in FIGS. 32 and 33, the controller 180 of the mobile terminal 100 can display an application corresponding to a specific icon to improve user convenience.

Referring to FIG. 32(a), the display 151 may display a back screen. Icons corresponding to various applications may be arranged on the back screen.

Referring to FIG. 32(b), the user can select a specific icon SI from the displayed icons using a finger F. The user may select the specific icon SI by long-touching the specific icon SI.

Referring to FIG. 33(a), upon the long touch applied to the specific icon SI, the controller 180 can display icons RI related to the specific icon SI. The related icons RI may be display by the specific icon SI.

Referring to FIG. 33(b), the user can perform an operation of dragging the specific icon SI to an icon corresponding to a desired application from among the displayed related icons RI. The desired application corresponding to the icon to which the specific icon SI has been dragged can be executed according to the drag operation. Otherwise, content corresponding to the specific icon SI can be moved to the selected application.

The above-described method of controlling the mobile terminal may be written as computer programs and may be implemented in digital microprocessors that execute the programs using a computer readable recording medium. The method of controlling the mobile terminal may be executed through software. The software may include code segments that perform required tasks. Programs or code segments may also be stored in a processor readable medium or may be transmitted according to a computer data signal combined with a carrier through a transmission medium or communication network.

The computer readable recording medium may be any data storage device that can store data that can be thereafter read by a computer system. Examples of the computer readable recording medium may include read-only memory (ROM), random-access memory (RAM), CD-ROMs, DVD±ROM, DVD-RAM, magnetic tapes, floppy disks, optical data storage devices. The computer readable recording medium may also be distributed over network coupled computer systems so that the computer readable code is stored and executed in a distribution fashion.

A mobile terminal may include a first touch screen configured to display a first object, a second touch screen configured to display a second object, and a controller configured to receive a first touch input applied to the first object and to link the first object to a function corresponding to the second object when receiving a second touch input applied to the second object while the first touch input is maintained.

A method may be provided of controlling a mobile terminal that includes displaying a first object on the first touch screen, displaying a second object on the second touch screen, receiving a first touch input applied to the first object, and linking the first object to a function corresponding to the second object when a second touch input applied to the second object is received while the first touch input is maintained.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A mobile terminal comprising:
a display configured to display information; and
a controller configured to:
control the display to display at least one first application and at least one icon corresponding to at least one second application on the display, the at least one second application related to the at least one first application; and
execute the at least one second application in response to selection of the at least one icon; and
control the display to display the at least one second application in response to selection of the at least one icon.

2. The mobile terminal of claim 1, wherein:
the controller is further configured to define a superimposed region by displaying at least a portion of the at least one second application to be superimposed on at least a portion of the at least one first application; and
the superimposed portions of the at least one first application and the at least one second application are both visible within the superimposed region.

3. The mobile terminal of claim 1 or 2, wherein the first application is executed by the mobile terminal.

4. The mobile terminal as claimed in any one of claims 1 to 3, wherein the at least one second application utilizes content of the at least one first application.

5. The mobile terminal as claimed in any one of claims 1 to 4, wherein content is transmitted in one direction between the at least one first application and the at least one second application.

6. The mobile terminal as claimed in any one of claims 1 to 5, wherein the at least one first application and the at least one second application exchange content.

7. The mobile terminal as claimed in any one of claims 1 to 6, wherein the controller is further configured to control the display to no longer display the at least one icon after a predetermined time period.

8. The mobile terminal as claimed in any one of claims 1 to 7, wherein the controller is further configured to control the display to display the at least one icon in an arrangement determined by at least a frequency of previous selections of each icon of the at least one icon during previous display of the at least one first application or a predetermined degree of correlation between each of the at least one second application and the at least one first application.

9. The mobile terminal as claimed in any one of claims 1 to 8, wherein the controller is further configured to control the display to change one or more of the at least one displayed icon in response to a change in content of the displayed at least one first application.

10. The mobile terminal as claimed in any one of claims 1 to 9, wherein the controller is further configured to control the display to:
display the at least one first application in a first area of the display, and
display the at least one second application in a second area of the display,
wherein the first area and the second area do not overlap.

11. The mobile terminal as claimed in any one of claims 1 to 10, wherein the controller is further configured to control the display to:
display the at least one first application and the at least one second application such that one is superimposed on the other in one or more regions of the display.

12. The mobile terminal of claim 11, wherein the display is a touchscreen and the controller is further configured to control the display to switch the relative positioning of the at least one first application and the at least one second application with respect to superimposition when at least a drag length of a pinch-in touch input applied to the display or a number of pinch-in touch inputs applied to the display within a predetermined time period exceeds a predetermined threshold.

13. The mobile terminal as claimed in any one of claims 1 to 12, further comprising a button,
wherein the controller is further configured to control the display to display the at least one icon in response to user input via the button.

14. The mobile terminal as claimed in any one of claims 1 to 13, wherein:
a plurality of first applications is displayed; and
the controller is further configured to control the display to demarcate the at least one icon to be visually associated with at least one of the displayed plurality of first applications based on a correlation between the at least one second application and the at least one of the displayed plurality of first applications.

15. A method of controlling a mobile terminal comprising a display configured to display information, the method comprising:
displaying at least one first application;
displaying at least one icon corresponding to at least one second application, the at least one second application related to the at least one first application; and
executing the at least one second application and displaying the at least one second application in response to selection of the at least one icon.
